# EUROPEAN PATENT SPECIFICATION

(11) **EP 0 652 827 B1**
(45) Date of publication and mention of the grant of the patent: **19.12.2001**
(21) Application number: 93918118.6
(22) Date of filing: 28.05.1993
(51) Int. Cl.: B32B 7/00, F24J 2/00, G02B 26/00

(54) **LIGHT ADMITTING THERMAL INSULATING STRUCTURE**
LICHTDURCHLÄSSIGE WÄRMEISOLIERUNGSKONSTRUKTION
STRUCTURE D'ISOLATION THERMIQUE TRAVERSEE PAR LA LUMIERE

(30) Priority: 28.07.1992 US 920919
(43) Date of publication of application: 17.05.1995
(73) Proprietor: CHAHROUDI, Day, Placitas, NM 87043 (US)
(72) Inventor: CHAHROUDI, Day, Placitas, NM 87043 (US)
(74) Representative: Cheyne, John Robert Alexander Mackenzie
(86) International application number: US9305173
(87) International publication number: WO9402313

(56) References cited:
- WO-A-92/16702
- DE-A- 3 913 552
- GB-A- 2 054 004
- GB-A- 2 097 288
- GB-A- 2 152 651
- US-A- 3 953 110
- US-A- 4 085 999
- US-A- 4 198 796
- US-A- 4 247 599
- US-A- 4 307 942
- US-A- 5 014 481

## Description

### BACKGROUND OF THE INVENTION

The present invention relates to an improved light admitting thermal insulating structure which prevents heat loss by thermal radiation, convection and conduction, including controllable transmission and/or reflection and/or absorption to light, and a convection baffle which transmits light and thermal radiation or "CBTLTR" to prevent convection loss.

Conventional collectors of solar heat include a dark absorber surface that turns sunlight into heat and a transparent cover for this surface to prevent the heat from escaping. The thermal collection efficiency of such a system is determined by the ratio of the resistance to the flow of heat of the transparent cover to the resistance of the rest of the system. By increasing the thermal resistance of the transparent cover without greatly reducing its light transmission, the efficiency and/or operating temperature of the solar heat collector can be greatly improved. It is estimated that two or three times the energy consumed in heating a well insulated building falls on its surface in the form of sunlight. Thus, an insulation that is transparent when the sun shines would provide most of the heating for a structure over most of the United States if it is coupled with a heat storage system for cloudy weather.

In the past the problems of heat loss through conduction, convection and thermal radiation (also called far infrared radiation) and control of sunlight have been dealt with independently. For example, convection and conduction losses are reduced using spaces filled with some fine structural material without consideration of admission of sunlight. Further, sunlight has been blocked using coatings of layers on windows to prevent room overheating but without consideration of a technique for admitting more sunlight when it is desired to increase the heat in the room. Thermal radiation loss has been of little concern since in the latter situation heat loss is desirable and in the former it is not considered.

Since the heat losses by conduction, convection and radiation are in parallel to each other and are of similar magnitudes, an insulation is ineffective unless all three are dealt with simultaneously, as heat will leave by the path of least resistance.

To best understand the invention, reference is made to 4 the Concise Encyclopedia of Science & Technology, Second Edition, McGraw Hill (1989) for a general definition of terms. Specifically, reference is made to Solar Optical Materials, edited by H. G. Hutchins, Permagon Press (1988); Transparent Insulation Materials and Transparent Insulation T2, both edited by L. F. Jesch, Franklin Co. Consultants Ltd. for the German Solar Energy Society (1986 and 1988, respectively); Large Area Chromogenics, edited by C. M. Lampert, SPIE Optical Engineering Press (1988); Spectral Selective Surface for Heating and Cooling Applications, C. G. Granqvist, SPIE Optical Engineering Press ( ); Optical Materials Technology of Energy, Efficiency and Solar Energy Conversion, edited by C. G. Granqvist, Vol. 9 (1990), Vol. 8 (1989), Vol. 7 (1988); Material & Optics for Solar Energy Conversion and Advanced Lighting Technology, edited by C. M. Lampert, SPIE Optical Engineering Press (1986); Solar Glazing, Mid Atlantic Energy Association, Topical Conference (1979); and Thermal Shutters and Shades, W. A. Shurcliff, Brickhouse Press, Andover, Mass. ( ). These publications set forth a comprehensive overview of technology related to this invention.

A light admitting insulation may be used in conjunction with an optical shutter to regulate light transmission while preventing the flow of heat. The optical shutter may be a layer or layers covering an aperture. The shutter may be reversibly activated by: (1) its local temperature (thermochromic); (2) incident light intensity (photochromic); (3) both temperature and light(thermophotochromic); or (4) an electric current or field (electrochromic). The combination of transparent insulations with a thermochromic optical shutter is the subject of U.S. Patents 4,085,999 and 3,953,1100 by the applicant herein. Thermochromic and thermophotochromic shutters, not in combination with a transparent insulation, are the subject of U.S. Patent 4,307,942 and U.S. Patent 5377042 by the applicant herein entitled "Structure and Preparation of Automatic Light Valves," filed on December 31, 1986. See also, "Thinking Window Switches off the Sun When it is Hot", popular Science, March, 1984, and my article "Contractor Designed Passive Heating, Cooling, and Daylighting", U.S. Passive Solar Conference (March 1990).

WO-A-9216702 (EP-A-572411) was published after the priority date of the present application and so falls within the terms of Art 54(3) EPC. This patent application describes a light admitting thermal insulating structure which allows light to pass into it while reducing the amount of heat energy which can pass through the structure. This disclosure describes a structure having controllable admission of light and may include a partition means between the outer and inner layers of the structure. The partition means divides the space between the outer and inner layers into compartments. The structure also includes a device for suppressing thermal radiation and a variable transparency device.

According to this prior art there is provided a thermal insulating layered structure with variable admittance for solar energy, the structure comprising:
an outdoor cover layer (511) of transparent weather-resistant material;
at least one solar energy admitting thermal insulation layer for which the value of TxR is not less then 0.35 in units of: light transmission x °C x m²/W (which equals 2 in units of percent light transmission x °F x hr. x sq. ft/BTU) where T is the light transmission and R is the thermal resistance in °C x m²/W (°F x hr. x sq. ft/BTU) ;
at least one layer (502, 509) of optical shutter material having solar energy transmission which is variable; and
an indoor cover layer (515) which is substantially parallel to the outdoor cover layer (511) and which either primarily transmits or primarily absorbs solar energy;
the layers being formed into a building panel (90) with the insulation and shutter layers disposed between the indoor and outdoor cover layers (511, 515) and with seals and spacers (64, 505, 85) disposed between at least some of the layers which are adjacent to each other.

None of the patents or application mentioned above provides the important advantages of addressing all forms of heat losses and heat uses for particular applications including the combination of a transparent insulation with a layer of optical shutter.

### SUMMARY OF THE INVENTION

It is an object of this invention to provide an improved light admitting thermal insulating structure which simultaneously substantially reduces heat loss by thermal radiation, convection and conduction.

It is a further object of this invention to provide a light admitting thermal structure (including a convection baffle) having controllable transmissivity to light.

It is a further object of this invention to provide a simple, inexpensive light admitting insulating system for improving the efficiency of collectors for solar space cooling, water heating and reducing heat losses through windows as well as improving the efficiency of solar space heating systems.

According to the invention, there is provided a thermal insulating layered structure with variable admittance for solar energy, the structure comprising:
an outdoor cover layer of transparent weather-resistant material;
at least one solar energy admitting thermal insulation layer for which the value of TxR is not less than 0.35 in units of light transmission x °C x m²/W (2 in units of percent light transmission x °F x hr. x sq. ft/BTU) where T is the percent light transmission and R is the thermal resistance in °C x m²/W (°F x hr. x sq. ft/BTU);
at least one layer of optical shutter material having solar energy transmission which is variable; and
an indoor cover layer which is substantially parallel to the outdoor cover layer and which either primarily transmits or primarily absorbs solar energy; and
a layer of heat storage material adjacent to the indoor cover layer;
the layers being formed into a building panel with the insulation and shutter layers disposed between the indoor and outdoor cover layers and with seals and spacers disposed between at least some of the layers which are adjacent to each other.

In more detail, the structure includes a convection baffle which transmits light and thermal radiation and one or more low emissivity layers, as well as an optical shutter which controls light transmission. Also, the structure may include an antireflection coating having low light and thermal radiation absorption disposed on one or more of the baffle surfaces. Further, the baffle may be constructed from a polyolefin selected from the group consisting of very high crystallinity polyethylene or very low crystallinity polyethylene thereby defining very low polyethylene.

Further, the structure of the present invention can be constructed as a thermal insulating building panel having controllable light transmission. A panel comprises a convection baffle which transmits light and thermal radiation between the inside and the outside of the panel, one or more low emissivity layers near the outside surface of the building, and an optical shutter layer near the inside of the building. It is pointed out that the invention is not limited to the structure described, but is intended to broadly cover processes of converting incident light to other forms of energy by using the inventive light admitting thermal insulating structure.

The basic novel improvements over the prior art are:
1. A convection supressor which is transmissive rather than absorbing or reflective of thermal radiation.
2. A antireflection coating of the above baffle which is also transparent to thermal radiation.
3. A light absorber which is incorporated into the light transmitting structures of prior art, e.g., into the thermal radiation reflector. Thus, most claims refer to a "light admitting structure," a term which includes both novel light absorbing structures and the prior art light transmitting structures with an added absorber.
4. New material in this application includes incorporation of thermal storage and interior finish into the claimed structures.

As pointed out in greater detail below, this invention provides important advantages. Heat losses (by conduction, convection and radiation) are all dealt with simultaneously which prevents heat loss by the path of least resistance. Further, the combination of a transparent insulation with a layer of photochromic or thermophotochromic optical shutters prevent the flow of heat and heat loss while regulating the flow of light.

The invention itself, together with further objects and attendant advantages, will best be understood by reference to the following detailed description taken in conjunction with the accompanying drawings.

### BRIEF DESCRIPTION OF THE DRAWINGS

Figure 1 is a block diagram showing the functional components of the light admitting thermal insulating system;
Figure 2 shows a convection baffle which transmits light and thermal radiation ("CBTLTR") suitable for suppressing convective heat transfer dividing a cavity into compartments oriented approximately parallel to the aperture it covers;
Figure 3 shows a CBTLTR suitable for suppressing convective heat transfer dividing a cavity into compartments oriented approximately perpendicular to the aperture it covers;
Figure 4 shows a CBTLTR suitable for suppressing convective heat transfer dividing a cavity into compartments using parallel sheets within a frame supporting the edges of the sheets;
Figure 5 is a cross section of light admitting thermal insulating structure using an illustrated modification of the CBTLTR of Figure 4 to illustrate the nature and type of each surface and layer;
Figure 6 is a transparent insulation which is another embodiment of the light admitting thermal insulating structure of Figure 5;
Figure 7 shows the dependence of light transmission on both temperature and incident light intensity for a typical thermophotochromic optical shutter;
Figure 8 shows in cross section a light transmitting building panel such as a window, skylight, or other solar collector, which is another embodiment of Figure 5 using an optical shutter;
Figure 9 is a cut away view of the panel of Figure 8;
Figure 10A shows the various possible locations of all of the necessary and optional layers to the light admitting structure;
Figure 10B shows the identity of the various possible layers depicted in Figure 10A; and
Figure 11 shows in cross-section a light transmitting building panel having a sealed structure containing heat storage material.

### DETAILED DESCRIPTION OF THE INVENTION

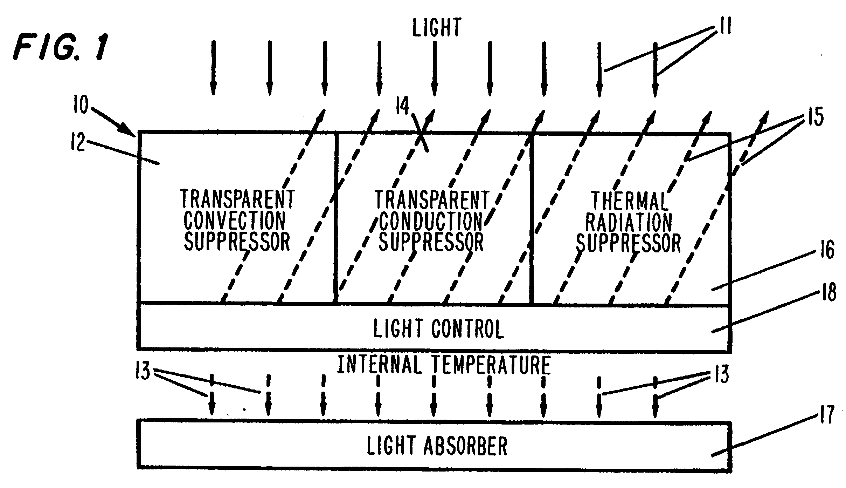

Turning now to the drawings, Figure 1 is a block diagram showing the functional components of the light admitting thermal insulating structure according to the invention. Figure 1 is a functional block diagram of a light admitting thermal insulating structure 10 having controllable transmissivity to light. The insulating structure 10 includes means for suppressing convection, conduction and thermal radiation heat losses, e.g., convection suppressor 12, conduction suppressor 14, and thermal radiation suppressor 16 which may include a low emissivity layer. For illustrative purposes, each of the suppressor 12, 14, 16 of thermal transport mechanisms extend over the whole system but are shown distinctly for convenience in explanation. Actually they are superimposed.

A light control 18, such as an optical shutter, adjusts the transmissivity of the structure 10 to light in accordance with the desired illumination level or the temperature of the area whose environment is to be controlled. As shown in Figure 1, the incident light 11 may pass through the light control 18 to provide transmitted light 13 or may be reflected to become reflected light 15. If it is transmitted, it may be absorbed on light absorber 17 which may or may not be an integral part of the structure.

The conduction suppressor 14 may be provided through the use of two or more spaced layers forming at least one compartment with a gas, vacuum or other medium therein to prevent conduction.

The thermal radiation suppressor 16 may include one or more coatings or layers of material which reflect and do not emit thermal radiation to prevent its transmission. These layers are called low emissivity layers. They may be transparent or may absorb light. The transmitted light 13 may then be absorbed in light absorber 17, where it turns into heat. If the light absorber 17 is part of the structure, then it may also be combined with the thermal radiation suppressor, herein called a "light absorbing low emissivity layer."

The convection suppressor 12 may include compartmentalizing the space between the layers or providing a vacuum therein. Another example of a thermal and convection suppressor is a finely structured, low density silica or other oxide(s) foam called "aerogel". The compartmentalizing may be accomplished by baffles or partitions which extend transversely between the layers and/or parallel to the layers, such as a CBTLTR, to restrict convective heat transport.

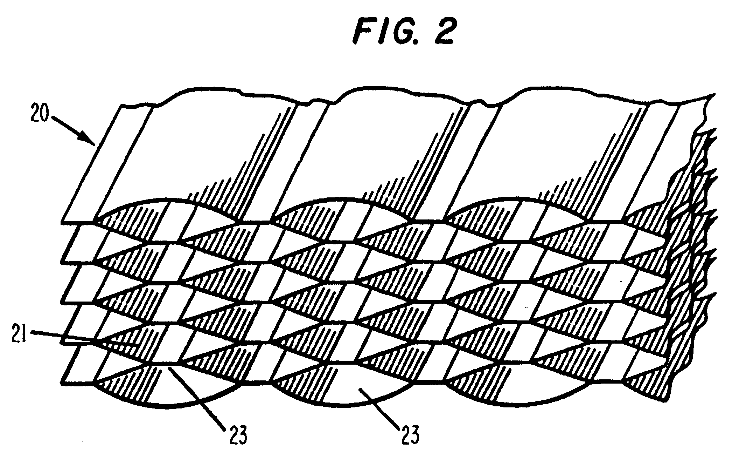

As illustrated in Figures 2, 3 and 4, a convection baffle which transmits light and thermal radiation ("CBTLTR") can be made from a thin sheet or film of a light and thermal radiation transparent material. Its function is to divide a gas filled cavity into compartments, and to thereby suppress convective heat transfer by the gas inside the cavity.

In Figure 1, the CBTLTR is an example of the convection suppressor 12. Figures 2, 3 and 4 show three possible configurations for CBTLTRs which all divide a cavity into compartments, and thereby suppress convective heat transfer.

Figure 2 shows a CBTLTR made from a polyolefin film 21 (for example, polyethylene) which may be heat sealed 22 together or assembled by another state of the art means. This embodiment of a CBTLTR has its compartments 23 oriented approximately parallel to the aperture it covers.

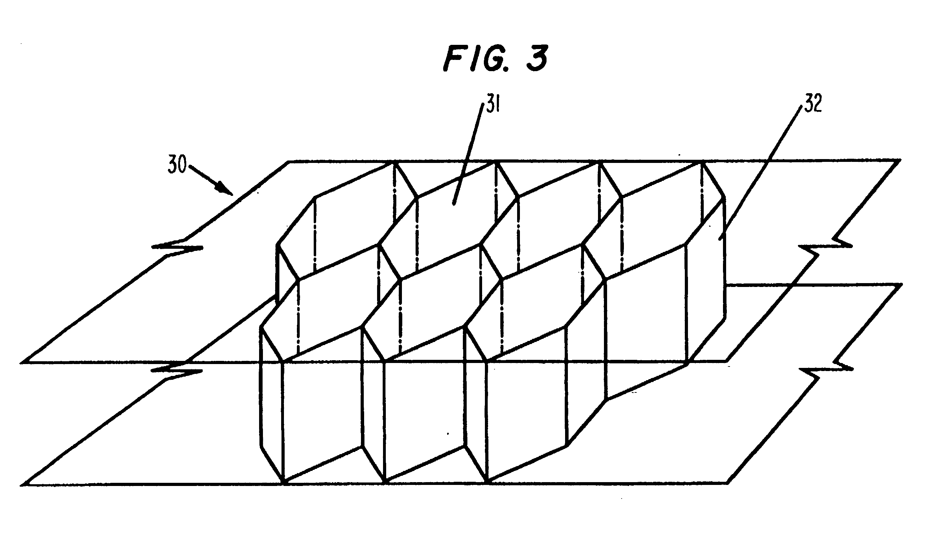

Figure 3 shows a CBTLTR 30 formed from a honeycomb whose plurality of compartments 31 are oriented approximately perpendicular to the aperture it covers. This example of a CBTLTR may also be made from polyethylene film 32.

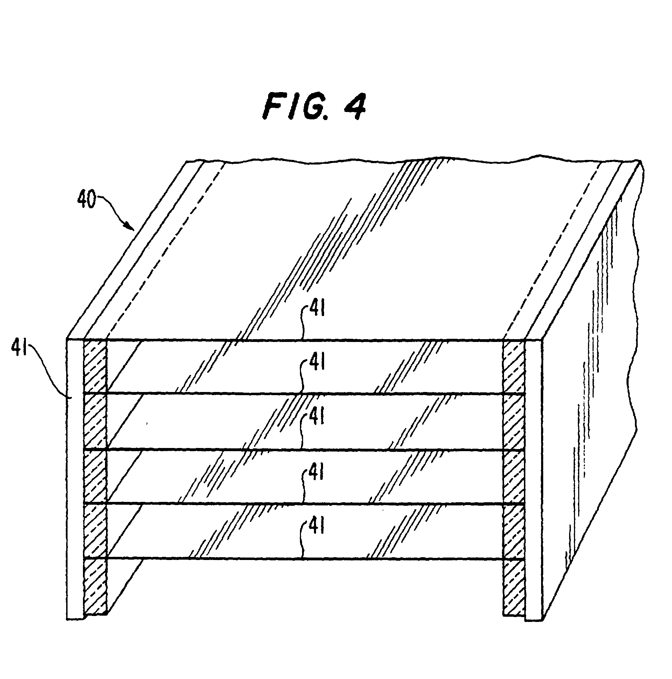

Figure 4 shows a CBTLTR 40 formed from parallel sheets 41 with a frame 42 supporting the edges of the sheets. The sheets may be made from polyethylene film.

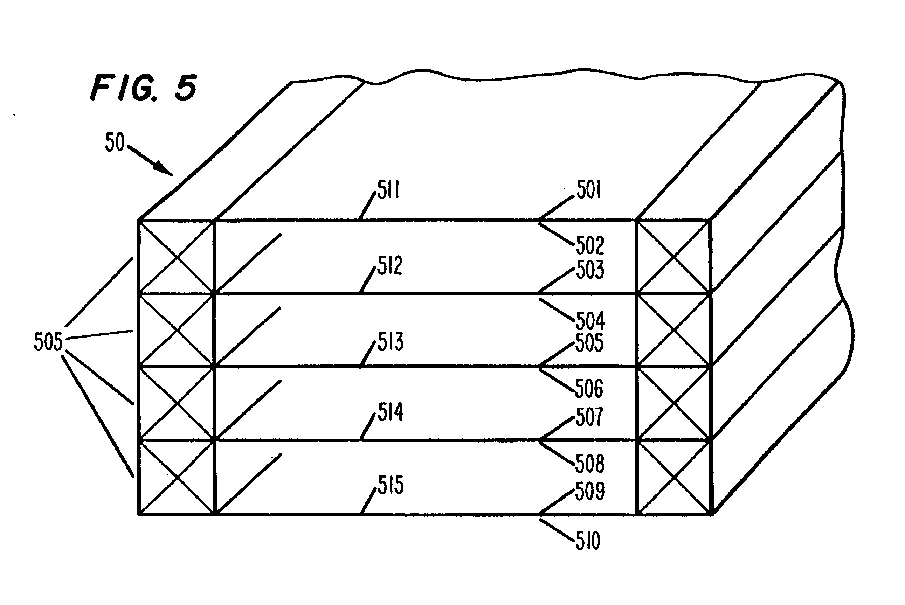

Figure 5 shows a light admitting thermal insulating structure where each surface and layer of the structure are labelled according to the specific function performed, e.g., such as CBTLTR 512, 513, 514 of the Figure 4; cover sheet 515, inner surface transparent cover sheet 502, etc. By changing what the surfaces and layers are, this figure will be used to illustrate most of the remaining embodiments of this invention. The scope of these embodiments are not limited to Figure 5, however, since Figures 2 or 3 or some other configuration could have been used as easily as Figure 4 as the basis for the figure illustrating the following discussion. For example, while the number of layers shown is five, this number is arbitrary, and is only for the purposes of illustration only. Further, because of the general nature of Figure 5 in illustrating numerous spatial relationships between the various layers and surfaces, other embodiments as hereinafter described may refer to the identifying numerals of the layer or surface as different elements.

The CBTLTR helps keep heat from being transmitted by not absorbing thermal radiation. If the CBTLTR were made of a thermal radiation absorbing and emitting material (that is if it had a high emissivity), then this material would transfer the heat it absorbs from convection of the gas into thermal radiation, which would then transfer the heat out.

Convection baffles which are transparent to thermal radiation are made of an ultra-clear sunlight-resistant polyethylene. Their function is to inhibit convection currents within the air spaces of weather panels without interfering with the operation of the low emissivity coated glass or film. The special formulated and processed polyethylene, unlike most plastics, is 90 percent transparent to long-wave infrared radiation, the kind that transfers heat. (If the baffles absorbed much infrared, they would transfer it despite the low emissivity coated layer and diminish that layer's effectiveness. These baffles are a distinct improvement over the prior art, where baffles would absorb or reflect thermal radiation rather than transmit it.) Unlike most polyethylenes, these polyethylenes are extremely transparent to sunlight and can hold up under the sun's ultraviolet rays for 30 years. Low emissivity baffles double the thermal resistance of transparent low emissivity coatings and they cost much less.

A CBTLTR can also be used to improve the thermal resistance and/or reduce the cost of light admitting thermal insulating structures which use one low emissivity layer. It also reduces the cost and light transmission losses of light admitting thermal insulating structures using more than one low emissivity layer by reducing the number of low emissivity layers required to achieve a given resistance. One or more of these low emissivity layer or layers can be either light transmitting or absorbing.

In a light admitting thermal insulating structure which uses more than one low emissivity layer in order to increase its thermal resistance, substituting layers of CBTLTR for one or more of the low emissivity layers will reduce cost and improve light transmission with but only slightly reduced thermal resistance. Thus, it is possible to make higher light transmission and/or lower cost light admitting thermal insulating structures by using CBTLTRs.

A CBTLTR can also be used to improve the thermal resistance of transparent insulations which are used with a high emissivity layer in order to radiate heat. A CBTLTR on top of a high emissivity layer can be used to cool a building when they cover its roof. The high emissivity layer radiates thermal radiation to the upper atmosphere, which in dry climates and at night is as much as 30°F cooler than the temperature of the air at ground level. The CBTLTR forms an insulation by thermally isolating the cooled thermal radiation radiator from warm ambient air. At the same time the CBTLTR is transparent to thermal radiation, allowing the radiator to operate. For these applications, the CBTLTR should be weather resistant, inexpensive, easy to install and creep resistant.

A CBTLTR and a low emissivity layer that absorbs light can be used to absorb solar heat efficiently. In this case, in Figure 1, thermal radiation suppressor 16 and light absorber 17 are combined in one layer. This layer is called a "low emissivity layer which absorbs light" or a "selective black". The CBTLTR 512, 513, 514 of Figure 5 forms a transparent insulation by preventing convection between the transparent outer cover sheet 515 of Figure 5 and the low emissivity, sunlight absorbing inner layer 509 of Figure 5. The inner surface transparent cover sheet 502 of Figure 5 can be either low emissivity or high emissivity layer. For these applications, the CBTLTR should have high light transmission and heat resistance as well as the performance characteristics listed above.

Since chemical degradation processes generally occur as an exponential function of temperature, it is useful to have converters of light to heat, such as solar collectors, become opaque when either the absorber surface or the outside air exceeds a certain temperature. Thus, in a modified embodiment of the invention of Figure 5, a structure which converts light to heat includes a thermochromic shutter (at numeral 502), a CBTLTR (at numerals 512 through 514), and a light absorbing low emissivity layer (at numeral 515). When the outside temperature is high and solar energy is not needed, the shutter is opaque.

Alternately, for use, for example, in a greenhouse having varieties of plants, another embodiment of the invention as illustrated in Figure 5 would define the thermochromic shutter layer (at numeral 509) with a light absorbing layer behind the shutter (at numeral 510), a transparent low emissivity layer (at numeral 502), and the CBTLTR (at numeral 512 through 514). In this case, the converter of light to heat becomes reflective when its absorber surface exceeds a preset temperature.

It should be noted that the converter of light to heat may not be intended as such. Photocells are intended to be a converter of light to electricity; but they convert light to heat to their own detriment. In this case, a CBTLTR and a low emissivity layer would also be detrimental. The above structures are only three of many possible examples of structures which protect converters of light to other forms of energy with optical shutters.

The CBTLTR and low emissivity layers which transmit light can be used as a building or other surfaces which capture solar energy. The sunlight can be used for space heating, illumination and growing plants. In this case, the one or more transparent low emissivity layers can be on any of the CBTLTR surfaces such as shown at numerals 503 through 508 or on the inner surfaces 502, 509 of the transparent covers (or glazings) 511, 515, which face the CBTLTR. In these applications, as in the applications described above, with light absorbing low emissivity layers, the CBTLTR serves to improve the performance of the low emissivity layer or layers by suppressing convection, while not interfering with light transmission.

In another embodiment the Figure 5 representation shows an improved transparent insulation using a CBTLTR. In this case, the outermost layers 511, 515, can be either transparent, absorptive or reflective (low emissivity) of thermal radiation. It is preferred that the layers 511, 515 are opaque to thermal radiation. The inner layers 512, 513, 514 are preferably transparent to thermal radiation so that they form a CBTLTR. The transparent low emissivity layer may be on any or all of the surfaces 502 through 509.

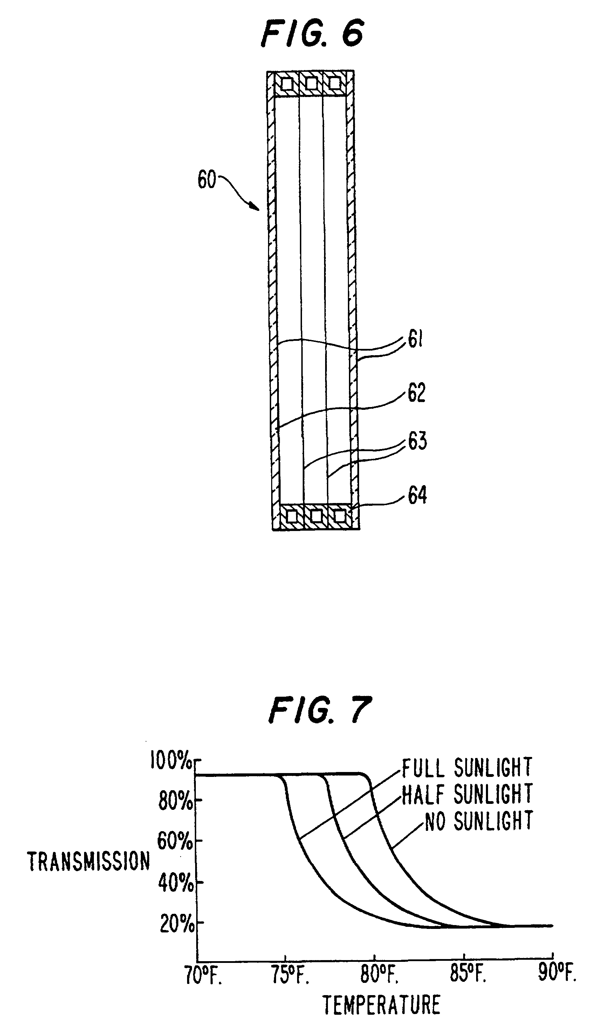

Figure 6 shows a window 60 with a high insulating value of about 5 square feet hour degree Fahrenheit/BTU (similar to an opaque insulated wall) and a high light transmission of about 70%. It is made using one transparent low emissivity coating and two layers of CBTLTR. For these applications, the CBTLTR should have all of the performance characteristics listed above, although heat resistance may not be as critical. Additionally, the CBTLTR should not impair viewing through the windows.

As shown in Figure 6, two light transmitting cover layers 61 can be made of glass, preferably of low iron content to prevent absorption and heating by sunlight. Alternatively they can be made of fiber reinforced polymer sheets which may be translucent or can be made from polymer films or sheets. A transparent low emissivity coating 62, two layers of CBTLTR 63, and spacers and seals 64 form the window. Alternatively, more than one transparent low emissivity layer can be used or placed on one or both layers of the CBTLTR 63. The number of layers of CBTLTR is not limited to three as shown in Figure 5 but may be any number suitable for the particular application.

A light admitting thermal insulating structure may be used in conjunction with an optical shutter to regulate light transmission while preventing the flow of heat. The optical shutter may be a layer or layers covering an aperture. The shutter may be reversibly activated by its local temperature (thermochromic); incident light intensity (photochromic); both temperature and light (thermophotochromic as shown in Figure 7); or an electric current or field (electrochromic).

A CBTLTR, one or more transparent low emissivity layers, and a thermochromic, photochromic, thermophotochromic or electrochromic optical shutter layer can be combined to make insulating panels which transmit and regulate light. In Figure 5, the shutter may be on any of the layers 511 through 515, but since it is not transparent to thermal radiation, it is preferably located on the outermost layers 511, 515. The transparent low emissivity layer or layers may be located on any of the inner surfaces 502 through 509. The inner layers, 512 through 514, are preferably CBTLTRs.

These panels can be used as improved collectors of solar energy which can be used, for example, for space heating, illumination or plant growth. These panels are an improvement over existing solar collectors for two reasons. They prevent the collection of solar energy when it is not wanted and are more energy efficient because the transparent insulation prevents unwanted loss or gain of sensible heat.

A thermochromic shutter is used as a light control, as shown by the light control 18 of Figure 1, when it is desired to keep the temperature on the "indoor" side of the panel constant. A photochromic shutter is used when more constant illumination is desired. A thermophotochromic shutter is used when constant temperature and illumination are both desired.

An electrochromic shutter is used when it is desirable to control the light transmission of the shutter externally, rather than by some combination of the incident light intensity and the temperature of the shutter. An electrochromic shutter can be controlled by, for example, a temperature or light sensor, a person or a computer. Unlike many thermochromic and thermophotochromic shutters, electrochromic shutters are usually specularly transmissive and imaging through them is possible. This is an advantage for window applications where a view through the window is usually desired along with the illumination it provides.

As shown in Figure 7, a thermophotochromic shutter whose reflectivity response to temperature and light is used to provide more constant illumination from, for example, a skylight which has transparent insulation, the shutter layer should be located on the indoor side of the transparent insulation. Indoor temperatures are more constant than outdoor temperatures and variations in the temperature of the shutter cause the undesired thermal response of the shutter to mask its desired photoresponse.

A light transmitting building panel, for example, a skylight using an optical shutter, can use a transparent insulation made from one or more transparent low emissivity layers and an CBTLTR. Transparent low emissivity surfaces typically absorb 10% of light. This absorption can make enough heat to mask a thermochromic or thermophotochromic shutter's response to heat or incident light intensity, respectively. Thus, the transparent low emissivity layer or layers should be located away from the thermochromic or thermophotochromic shutter, possibly near the outside of the transparent insulation. This location is preferable in some applications for another reason. It keeps the solar heat absorbed by the low emissivity layer or layers near the outside of the building where it can leave without causing unwanted summer heat loads.

Thus, the preferred structure for solar light and/or heat collecting panels using: a thermochromic or thermophotochromic shutter; one or more transparent low emissivity layers; and a CBTLTR, is: the shutter near (that is, adjacent to or forming) the indoor side, the low emissivity layer or layers near the outdoor side, and the CBTLTR inbetween.

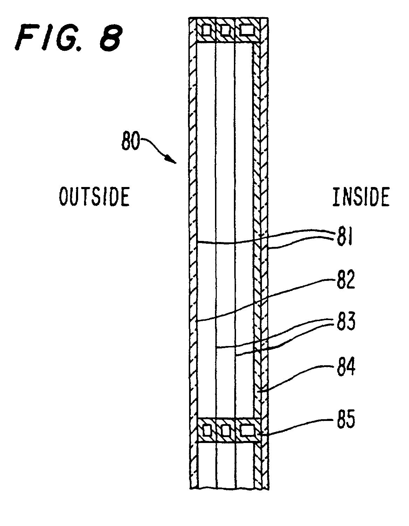

As shown in Figure 8, a cross section of a light transmitting building panel 80 or skylight with this preferred structure is illustrated and is a special embodiment of Figure 5. The panel 80 includes light transmitting cover sheets 81, a low emissivity layer 82, a CBTLTR 83, a thermo-optical or thermophoto-optical shutter 84, and spacers and seals 85.

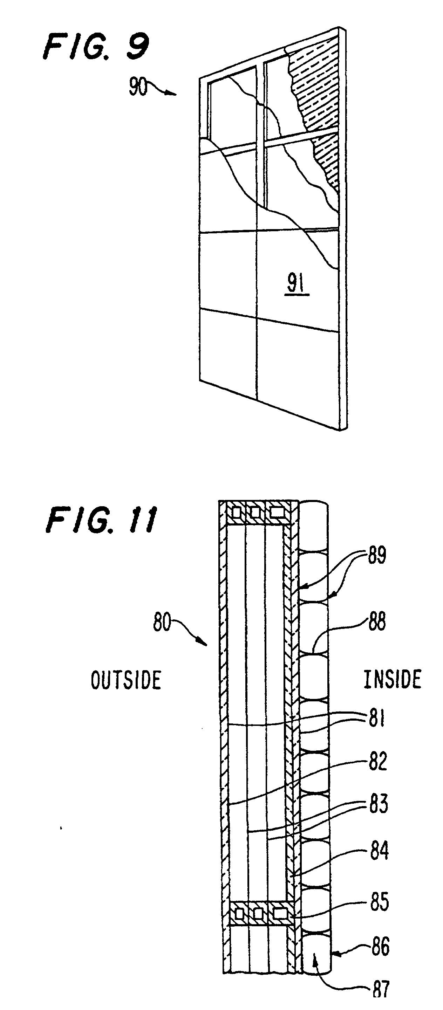

Merely by way of example, Figure 9 illustrates a cut away view of the light transmitting building panel 80 of Figure 8. It is pointed out that there can be more than one transparent low emissivity layer and the low emissivity layer(s) can be located on the CBTLTR. Also, there can be a different number of layers in the CBTLTR.

The scope of the invention is not to be limited by any of these illustrative figures, as many other configurations for CBTLTRs, building panels and skylights are desirable for different applications. The prefabricated panel is a novel way to go about building the building designs previously claimed. Alternatively, the same building design could be built without prefabricated panels, by assembling a whole roof from each of these layers of material, one at a time, on site.

If a skylight's top surface is domed or faceted, the preferable location for the transparent low emissivity surface may be on the CBTLTR layer closest to the outside of the building because it is difficult to apply a transparent low emissivity layer to a domed surface.

The light transmission of a CBTLTR can be enhanced with antireflection layers. For example, the light transmission of the configurations in Figures 6 and 8 can be increased from about 70% to about 80%, and preferably to about 85%. However, these antireflection layers must not absorb much thermal radiation or they will reduce the CBTLTR's thermal resistance. Low refractive index materials which do not absorb much thermal radiation when their thickness is in the order of 1,000 Å (the approximate thickness of antireflection layers) include: porous and columnar aluminum or silicon oxide and other oxide layers, which may have a graded refractive index and broad band antireflection properties; magnesium fluoride or perfluoropolymer, such as polytetrafluoroethylene, quarter wave layers; fluorinated polymer to unfluorinated polymer graded index layers, etc. These antireflection layers may be placed on any and all surfaces of the CBTLTR and its transparent cover or covers, e.g., in Figure 5, surfaces 501 to 510.

Antiabrasion antireflection coatings (AAR) coatings should have: refractive index in the range of 1.3 to 1.4, the lower, the better; thickness of one quarter wavelength of visible light, or about 1,000 Å, at least for the top layer if the AAR is multilayer or has a graded refractive index; hard surface; low coefficient of friction; and for glazing applications, weather and pollution resistant.

AAR coatings on both sides of as plastic film can reduce the film's reflectivity of greater than 8% to 2%. To maintain their high light transmission during use, they are scratch resistant, repel dust and are easy to clean. Almost eliminating reflection makes the film or sheet virtually invisible, increasing packaging materials market appeal, and increasing glazing efficiency. Glazing applications for AAR coated glass and plastic sheet and film include building and car windows, skylights, greenhouses, solar cells and solar collectors.

A polymer surface can be made to have a graded index antireflection layer composed of low refraction index perfluorinated polymer on the outside which has a composition graded to unfluorinated polymer inside. For best results the polymer should be highly fluorinated (more than 70%) on the outside, and slightly fluorinated (less than 30%) on the inside.

For example, the thickness of this film graded index layer can be controlled such that transmission of visible or of photosynthetically active light, or of solar heat is maximum. Such antireflection layers have been made by exposing a polyethylene film to a gas composition of 99.9% nitrogen or argon and 0.1% elemental fluorine for a few minutes at room temperature.

Plastic bottles which are blow molded commercially may have their inside surfaces fluorinated while they are still hot in mold (for greater thickness of fluorination than is required for maximum antireflection) to impart impermeability to oil by exposure to a similar gas mixture.

An advantage of surface fluorination of polymers beyond antireflection is imparting durability to the surface of the polymer where degradation (or weathering or corrosion) of the polymer takes place first. One of the primary means of weather degradation of plastic surfaces is stress crack corrosion, where the plastic produces volatile products from weather degradation, and then shrinks and cracks. The tip of this crack is the site of more rapid corrosion due to the concentration in its small radius of stress from shrinkage and thus the crack propagates rapidly into the bulk of the polymer.

Stability is imparted to the polymer by surface fluorination by at least three mechanisms. First, the surface volume increases with fluorination which places the surface under compression, which forms a prestressed surface more scratch and abrasion resistant and which resists cracking when the surface is bent, such as in the creasing of a plastic film.
Second, fluorination prevents degradation because fluorinated polymers are the most degradation resistant. Third, fluorinated polymers have a much lower coefficient of friction than unfluorinated polymers, which imparts greater abrasion resistance. Surface fluorination may also be used with the hindered amine stabilizers described below, to thereby impart the many attendant advantages of each to the selected polymer.

While it has long been known that polyolefins, and preferably polyethylene, are the only highly thermal radiation transparent polymeric films, polyethylene has not been usable in transparent insulations such as low emissivity windows because of: (1) its haze and consequent poor light transmission; (2) its vulnerability to solar ultraviolet, oxidation and other degradation; and (3) its creep. The haze in polyethylene is caused by partial crystallization, so very low haze polyethylene films can be made by both very high and very low crystallinity. These polyolefin films can be stabilized for resistance to degradation with polymeric hindered amine, for example, Cyasorb 3346 made by American Cyanamide, at a loading from about 0.1% to about 0.5%. Such films have passed accelerated aging equivalent to 30 years of solar UV filtered through commercial glass. To prevent creep, these polyolefins films can be cross linked by the conventional methods for polyethylene: electron curtain, UV light, or heat; each with appropriate cross linking additives, such as polysaturated compounds, e.g., octadiene and methylene bis acrylamide.

Very high crystallinity polyethylene films are preferably made from highly linear, high molecular weight, narrow molecular weight distribution polyethylene resin or a linear medium or low density polyethylene resin. All of these polyethylene resins are made by a low pressure polymerization process typically using a Ziegler type catalyst. Low pressure polymerization also produces fewer degradation sites. This polyethylene film may be uniaxially oriented and calendared simultaneously to increase its crystallinity and light transmission both to greater than 90%. A suitable polyethylene film is available from Tredagar Films, Inc. under the trade name of MONOX. The linear medium, low and high density materials may be transversely oriented on a tenter to produce more symmetrical biaxial (e.g, heat shrink) properties. Heat shrinking at predetermined temperatures may be used to easily assemble essentially wrinkle free CBTLTRs.

Very low crystallinity polyethylene is preferably made from low density or ultra low density linear, low pressure polymerized polyethylene which is quenched rapidly immediately after extrusion with a chill drum or water to prevent crystallization. While various polymers and combinations of a mixture of different types of polymers may be used, it is preferred to use primarily polyolefin, meaning a polymer composition of at least 80% polyolefin.

Variations on the embodiments described above are possible. For example, in Figure 1, the light control layer may be either a photochromic or thermophotochromic shutter while the combination of the transparent convection, conduction and thermal radiation suppressor constitutes a transparent insulation.

In another variation, a transparent insulation with a photochromic or thermophotochromic shutter can be used to regulate the transmission of solar light and/or heat into a building. A skylight can use a photochromic shutter to reduce the fluctuations in transmitted light caused by variations in incident light and thereby provide more constant illumination to minimize unwanted solar heat gains in the summer.

In yet another variation, a thermophotochromic shutter can be used to maximize the growth of plants in a greenhouse. The plants' growth inhibition from heat stress is minimized by the thermal response of the shutter while the greenhouses' cooling costs are minimized by the photoresponse of the shutter.

Both the skylight and the greenhouse applications would benefit from using a transparent insulation in conjunction with the shutter. The transparent insulation would reduce heating and cooling costs of both the greenhouse and the building with the skylight.

Suitable transparent insulation components exemplified in Figures 7-11 are known in the art and they are exemplified by: honeycomb structures, disclosed by Volker Wittwer "Transparent Insulation Materials," OPTICAL MATERIALS TECHNOLOGY, p. 284, March 1990, International Society For Optical Engineering; convection baffles, disclosed in WO-A-9216702; honeycomb structures and low emissivity coatings disclosed in U.S. Patent Nos. 3,953,110, 4,085,999 and 4,389,452, all by D. Chahroudi; Vacuum disclosed by J.D. Garrison in "Evaluation of a Thermally Circulating Vacuum Window," 15th National Passive Solar Conference, p. 43, American Solar Energy Society, March 1990; and aerogels, disclosed by M. Mielke et al. in "Aerogels - a new class of material," presented at The 1st International Workshop on Transparent Insulation Materials for Passive Solar Energy Utilisation, p. 25, November 27-28, 1986, German section of International Solar Energy Society.

For example, the transparent insulation has T X R ≥ 0.35 in units of percent light transmission x °C x m²/W (2% light X °F X hr. X sq. ft./BTU) where T is the percent light transmission and R is the thermal resistance, in °F X hr. X sq. ft./BTU, of the transparent insulation. Further, the transparent insulation is selected from transparent low emissivity coatings used with a convection baffle which transmits light thermal radiation (CBTLTR); transparent low emissivity coatings used with a vacuum layer; transparent honeycomb material; aerogel; and multiple layers of antireflection glazing.

In yet another variation, thermal storage is necessary in solar buildings because the sun does not shine all the time, for example, at night. Sufficient heat for overnight storage in cold winter climates in a well insulated house may be contained in 1.27-2.54 cm (½" - 1") of water in 5.08 cm (2") of concrete or in 6.25 mm (¼") of a phase change material, such as CACl₂·6H₂ or Na₂SO₄·H₂O, which melts and freezes within the human comfort zone of 18°C-27°C (65°F - 80°F.) The above materials are inexpensive, durable, non-toxic and non-flammable.

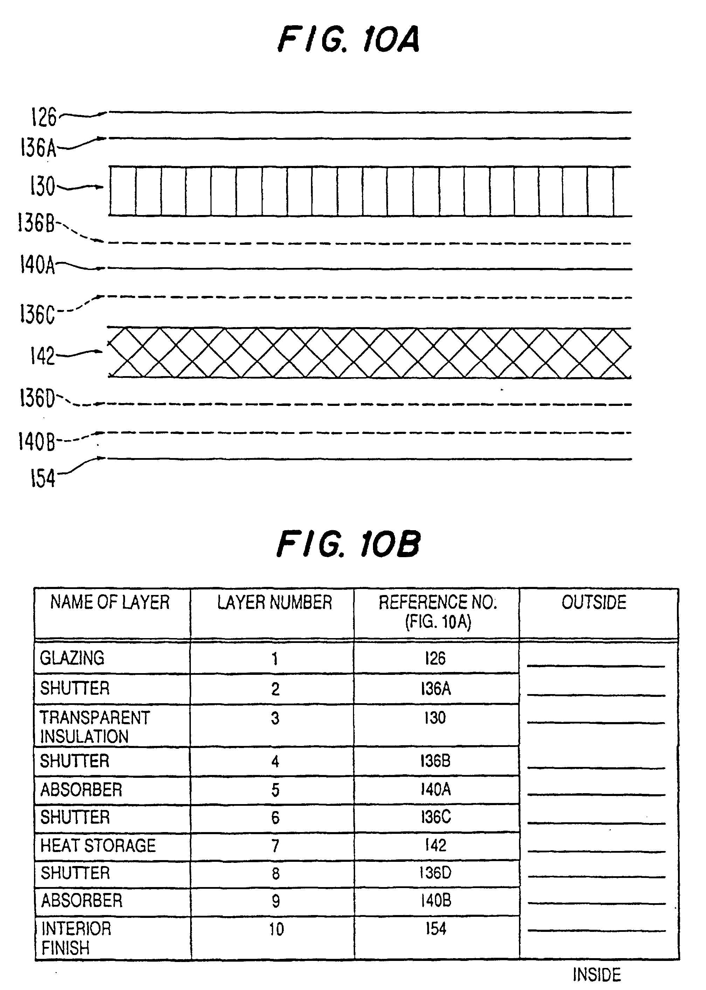

As shown in Figure 10A, the location of the heat storage element 142 may be below and in proximate location (also referred to herein as "heat transfer relationship") to a part of the solar collector 122. By proximate location (also referred to herein as "heat transfer relationship") it is meant that the heat storage element 142 is positioned in such a relationship to the rest of the solar collector that the energy received by the solar collector is transferred to the heat storage element 142 by heat transfer mechanisms, as described hereinafter. For example, Figure 10A indicates several of the possibilities for the heat storage element 142 location, e.g., between and adjacent to the solar radiation absorbing material, whose location is alternatively indicated as 140A or 140B, and the optional interior finish 154 and optical shutter 136B or transparent insulation 130. Heat storage element 142 must be placed below the transparent insulation 130, as shown in Figure 10A. If the heat storage element 142 is transparent, then a reflective thermochromic optical shutter 136 may be located on either side of the transparent heat storage element 142 as indicated by alternative locations 136C or 136D. If the reflective optical shutter 136 is thermochromic, it should be located inside the building (not shown) from the transparent insulation 130 so that the reflective optical shutter will become reflective when the building (not shown) and its heat storage element 142 are too warm, and the reflective optical shutter will turn opaque when the structure and/or its heat storage element 142 are too cool.

Since water and phase change materials pass through a liquid phase, it is necessary for them to have a container which is in the range of ¼" to 2" thick and may have its other dimensions in the order of 2' to 16'. Such a large flat sealed container can be inexpensively fabricated from tubes or channels, as shown in Figure 11. These channels may be made of extruded plastic, sealed plastic film, or metal. For example, as shown in Figure 11, a sealed channel structure 86 contains heat storage material 87 in a building panel similar to the panel described in Figure 8. (Numerals 80-85 in Figure 11 refer to the same elements as elements 80-85 in Figure 8.)

In another embodiment of the thermal storage material container above, the two large surfaces 89 of the sealed container in Figure 11 may be spaced apart and connected by elements 88 shaped either like one dimensional rods or two dimensional surfaces. These surfaces may divide the container into cells, to produce a cellular structure.

In yet another variation, and in order to minimize onsite hand labor and replace that labor with factory machine production, it is useful for the light admitting panels to have a prefabricated finish for the interior of the building. This finish may consist of paint, wallpaper, plastic, sheetrock, acoustic tile, or wood, for example. Further, it may have a particle layer of plastic or cardboard, for example, so that the finish does not become damaged during building construction. The protective layer then may be removed after the panel is installed.

## Claims

1. A thermal insulating layered structure with variable admittance for solar energy, the structure comprising:
an outdoor cover layer (511) of transparent weather-resistant material;
at least one solar energy admitting thermal insulation layer for which the value of TxR is not less than 0.35 in units of % light transmission x °C x m²/W (2 in units of percent light transmission x °F x hr. x sq. ft/BTU) where T is the percent light transmission and R is the thermal resistance in °C x m²/W (°F x hr. x sq. ft/BTU);
at least one layer (502,509) of optical shutter material having solar energy transmission which is variable; and
an indoor cover layer (515) which is substantially parallel to the outdoor cover layer (511) and which either primarily transmits or primarily absorbs solar energy; and
a layer of heat storage material (87, 142) adjacent to the indoor cover layer;
the layers being formed into a building panel (90) with the insulation and shutter layers disposed between the indoor and outdoor cover layers (511, 515) and with seals and spacers (64, 505, 85) disposed between at least some of the layers which are adjacent to each other.

2. A structure as claimed in claim 1, wherein the said heat storage material (87, 142) is selected from water which does not circulate outside the said structure, phase change material, concrete and masonry.

3. A structure as claimed in claim 1, wherein the heat storage material is contained within a channelled structure (86).

4. A structure as claimed in claim 1, wherein the heat storage material is contained within a sealed cellular structure (3).

5. A structure as claimed in claim 1, wherein the heat storage material is contained within a sealed structure of two parallel sheets (89) connected and spaced apart with rods or sheet elements (88).

6. A structure as claimed in claim 1, wherein the thermal insulation layer comprises one or more layers having a low emissivity coating (502-509).

7. A structure as claimed in claim 6,the layers of the structure being spaced apart by gas or vacuum layers

8. A structure as claimed in any one of the preceding claims, wherein the thermal insulation layer includes at least one gas layer.

9. A structure as claimed in claim 8, in which the thermal insulation layer includes a convection baffle (20, 32, 512-514, 63, 83) which is substantially transparent to light and thermal radiation, and which is located between the indoor and outdoor cover layers.

10. A structure as claimed in claim 8, wherein the convection baffle is in the form of a honeycomb (32), and is substantially transparent to solar radiation, and which is arranged so that the cells of the honeycomb extend substantially perpendicularly to the cover layers.

11. A structure as claimed in claim 9 or 10, wherein the convection baffle is of a material of more than 80% polyolefin.

12. A structure as claimed in claim 11, wherein the polyolefin is a polyethylene material having a crystallinity which is very high or very low.

13. A structure as claimed in claim 11, wherein the polyolefin contains 0.1 to 1% by weight of hindered amine stabilisers.

14. A structure as claimed in claim 11, wherein the polyolefin is cross-linked.

15. A structure as claimed in any one of claims 9 to 14, wherein a transparent low emissivity coating (503-508) is provided on the convection baffle.

16. A structure as claimed in claim 1, wherein the thermal insulation layer comprises a plurality of layers (511-515) which are transparent to solar energy and substantially opaque to thermal radiation, each layer being separated from an adjacent layer by a layer of gas.

17. A structure as claimed in claim 1, wherein the thermal insulation layer comprises a layer of aerogel material.

18. A structure as claimed in any one of the preceding claims, wherein the indoor cover layer primarily absorbs solar energy (17, 509, 140B).

19. A structure as claimed in claim 18, wherein the indoor cover layer has an absorbing low emissivity coating (509).

20. A structure as claimed in any one of the preceding claims, wherein the indoor cover layer has a transparent low emissivity coating (509).

21. A structure as claimed in any one of the preceding claims, wherein the outdoor cover layer has a transparent low emissivity coating (509).

22. A structure as claimed in any one of the preceding claims, including a vacuum between the indoor and outdoor cover layers (511, 515).

23. A structure as claimed in any one of the preceding claims, wherein the indoor cover layer includes a photoelectric cell.

24. A structure as claimed in any one of the preceding claims, wherein the or at least one of the optical material shutter layers is photochromic.

25. A structure as claimed in any one of claims 1 to 23, wherein the or at least one of the optical shutter material layers is thermophotochromic.

26. A structure as claimed in any one of claims 1 to 23, wherein the or at least one of the optical shutter material layers is electrochromic.

27. A structure as claimed in any one of claims 1 to 23, wherein at least on of the optical shutter material layers is thermochromic.

28. A structure as claimed in claim 27, in which a said thermochromic optical shutter material layer (502, 509) is placed on both the outdoor and indoor cover layers (511, 515), the thermal insulation layer comprising one or more transparent low emissivity coatings placed adjacent to one or more layers of vacuum or gas.

29. A structure as claimed in claim 28, in which the transparent insulation layer includes two or more spaced layers forming at least one compartment containing a vacuum, the indoor cover layer primarily transmitting solar energy.

30. A structure as claimed in claim 28, in which the transparent insulation layer includes two or more spaced layers forming at least one compartment containing a vacuum, the indoor cover layer primarily absorbing solar energy.

31. A structure as claimed in claim 28, in which the transparent insulation layer includes two or more spaced layers forming at least one compartment containing gas, the indoor cover layer primarily transmitting solar energy.

32. A structure as claimed in claim 28, in which the transparent insulation layer includes two or more spaced layers forming at least one compartment containing gas, the indoor cover layer primarily absorbing solar energy.

33. A structure as claimed in any one of the preceding claims, wherein one of more of the indoor and outdoor cover layers and the convection baffle has at least one anti-reflective coating (501-510).

34. A structure as claimed in claim 16, or in any one of claims 17 to 33 when appendant to claim 16, wherein the or each anti-reflective coating (501-510) has a graded refractive index and is made from either a fluorinated polymer or a porous or columnar aluminium or silicon oxide.

35. A structure as claimed in claim 19, wherein said structure additionally comprises a prefabricated interior finish.

36. A structure as claimed in claim 35, wherein said interior finish is selected from paint, plastic, wallpaper, plaster, sheetrock, acoustic tile or wood.

## Patentansprüche

1. Wärmedämmende Schichtstruktur mit variabler Durchlässigkeit für Sonnenenergie, umfassend:
eine Außenverkleidungsschicht (511) aus einem durchsichtigen wetterfesten Material;
mindestens eine Sonnenenergie einlassende wärmedämmende Schicht, für die der Wert T x R nicht kleiner ist als 0,35, ausgedrückt in Einheiten der prozentualen Lichtdurchlässigkeit x °C x m²/W (2, ausgedrückt in Einheiten der prozentualen Lichtdurchlässigkeit x °F x Std. x Fuß²/BTU), wobei T die prozentuale Lichtdurchlässigkeit und R die Wärmebeständigkeit in °C x m²/W (°F x Std. x Fuß²/BTU) ist;
mindestens eine Schicht (502, 509) eines optischen Blendenmaterials, dessen Sonnenenergiedurchlässigkeit variabel ist; und
eine Innenverkleidungsschicht (515), die im Wesentlichen parallel zur Außenverkleidung'sschicht (511) verläuft, und die die Sonnenenergie entweder hauptsächlich durchlässt oder hauptsächlich absorbiert; und
eine Schicht aus einem Wärmespeichermaterial (87, 142), die an die Innenverkleidungsschicht angrenzt;
wobei die Schichten zu einem Bauelement (90) geformt werden, bei dem sich die Dämm- und Blendenschichten zwischen der Innen- und Außenverkleidungsschicht (511, 515) befinden, und wobei sich Dichtungen und Zwischenstücke (64, 505, 85) zwischen mindestens einigen der aneinander grenzenden Schichten befinden.

2. Struktur nach Anspruch 1, wobei das Wärmespeichermaterial (87, 142) ausgewählt ist aus Wasser, das außerhalb der Struktur nicht zirkuliert, einem Phasenumwandlungsmaterial, Beton und Zement.

3. Struktur nach Anspruch 1, wobei sich das Wärmespeichermaterial in einer Kanalstruktur (86) befindet.

4. Struktur nach Anspruch 1, wobei sich das Wärmespeichermaterial in einer geschlossenen Zellenstruktur (3) befindet.

5. Struktur nach Anspruch 1, wobei sich das Wärmespeichermaterial in einer geschlossenen Struktur aus zwei parallelen Platten (89) befindet, die durch Stäbe oder Plattenbauteile (88) verbunden sind und damit auf Abstand gehalten werden.

6. Struktur nach Anspruch 1, wobei die Wärmedämmungsschicht eine oder mehrere Schichten mit einer Niederemissionsbeschichtung (502-509) umfasst.

7. Struktur nach Anspruch 6, wobei die Schichten der Struktur durch Gas- oder Vakuumschichten von einander getrennt sind.

8. Struktur nach einem der vorhergehenden Ansprüche, wobei die Wärmedämmungsschicht mindestens eine Gasschicht umfasst.

9. Struktur nach Anspruch 8, wobei die Wärmedämmungsschicht eine Konvektionssperre (20, 32, 512-514, 63, 83) umfasst, die im Wesentlichen für Licht und Wärmestrahlung durchlässig ist und sich zwischen der Innen- und Außenverkleidungsschicht befindet.

10. Struktur nach Anspruch 8, wobei die Konvektionssperre wabenförmig (32) ist, im Wesentlichen durchlässig für Sonnenstrahlung ist und so aufgebaut ist, dass die Zellen der Waben im Wesentlichen rechtwinklig zu den Verkleidungsschichten verlaufen.

11. Struktur nach Anspruch 9 oder 10, wobei die Konvektionssperre aus einem Material aus mehr als 80% Polyolefin besteht.

12. Struktur nach Anspruch 11, wobei das Polyolefin ein Polyethylenmaterial ist, dessen Kristallinität sehr hoch oder sehr klein ist.

13. Struktur nach Anspruch 11, wobei das Polyolefin 0,1 bis 1 Gew.% gehinderte Amin-Stabilisatoren enthält.

14. Struktur nach Anspruch 11, wobei das Polyolefin vernetzt ist.

15. Struktur nach einem der Ansprüche 9 bis 14, wobei sich auf der Konvektionssperrre eine durchsichtige Niederemissionsbeschichtung (503-508) befindet.

16. Struktur nach Anspruch 1, wobei die Wärmedämmungsschicht eine Anzahl von Schichten (511-515) umfasst, die für Sonnenenergie durchlässig ist und für Wärmestrahlung im Wesentlichen undurchlässig ist, wobei jede Schicht durch eine Gasschicht von der Nachbarschicht getrennt ist.

17. Struktur nach Anspruch 1, wobei die Wärmedämmungsschicht eine Schicht aus einem Aerogelmaterial umfasst.

18. Struktur nach einem der vorhergehenden Ansprüche, wobei die Innenverkleidungsschicht hauptsächlich Sonnenenergie absorbiert (17, 509, 140B).

19. Struktur nach Anspruch 18, wobei die Innenverkleidungsschicht eine absorbierende Niederemissionsbeschichtung (509) aufweist.

20. Struktur nach einem der vorhergehenden Ansprüche, wobei die Innenverkleidungsschicht eine durchsichtige Niederemissionsbeschichtung (509) aufweist.

21. Struktur nach einem der vorhergehenden Ansprüche, wobei die Außenverkleidungsschicht eine durchsichtige Niederemissionsbeschichtung (509) aufweist.

22. Struktur nach einem der vorhergehenden Ansprüche, wobei sich zwischen Innen- und Außenverkleidungsschicht (511, 515) ein Vakuum befindet.

23. Struktur nach einem der vorhergehenden Ansprüche, wobei die Innenverkleidungsschicht eine photoelektrische Zelle umfasst.

24. Struktur nach einem der vorhergehenden Ansprüche, wobei die oder mindestens eine der optischen Blendenmaterialschichten photochrom ist.

25. Struktur nach einem der Ansprüche 1 bis 23, wobei die oder mindestens eine der optischen Blendenmaterialschichten thermophotochrom ist.

26. Struktur nach einem der Ansprüche 1 bis 23, wobei die oder mindestens eine der optischen Blendenmaterialschichten elektrochrom ist.

27. Struktur nach einem der Ansprüche 1 bis 23, wobei mindestens eine der optischen Blendenmaterialschichten thermochrom ist.

28. Struktur nach Anspruch 27, wobei sich die thermochrome optische Blendenmaterialschicht (502, 509) auf den Außen- und Innenverkleidungsschichten (511, 515) befindet, und die Wärmedämmungsschicht eine oder mehrere durchsichtige Niederemissionsbeschichtungen umfasst, die an eine oder mehrere Vakuum- oder Gasschichten angrenzen.

29. Struktur nach Anspruch 28, wobei die durchsichtige Dämmschicht zwei oder mehrere getrennte Schichten umfasst, die mindestens eine vakuumhaltige Kammer bilden, und die Innenverkleidungsschicht hauptsächlich Sonnenenergie durchlässt.

30. Struktur nach Anspruch 28, wobei die durchsichtige Dämmschicht zwei oder mehrere getrennte Schichten umfasst, die mindestens eine vakuumhaltige Kammer bilden, und die Innenverkleidungsschicht hauptsächlich Sonnenenergie absorbiert.

31. Struktur nach Anspruch 28, wobei die durchsichtige Dämmschicht zwei oder mehrere getrennte Schichten umfasst, die mindestens eine gashaltige Kammer bilden, und die Innenverkleidungsschicht hauptsächlich Sonnenenergie durchlässt.

32. Struktur nach Anspruch 28, wobei die durchsichtige Dämmschicht zwei oder mehrere getrennte Schichten umfasst, die mindestens eine gashaltige Kammer bilden, und die Innenverkleidungsschicht hauptsächlich Sonnenenergie absorbiert.

33. Struktur nach einem der vorhergehenden Ansprüche, wobei eine oder mehrere der Innen- und Außenverkleidungsschichten und die Konvektionssperre eine reflexmindernde Beschichtung (501-510) aufweisen.

34. Struktur nach Anspruch 16 oder einem der Ansprüche 17 bis 33, wenn diese Anspruch 16 anhängen, wobei die oder jede reflexmindernde Beschichtung (501-510) einen abfgestuften Brechungsindex aufweist und entweder aus einem fluorierten Polymer oder einem porösen oder säulenförmigen Aluminium- oder Siliciumoxid besteht.

35. Struktur nach Anspruch 19, wobei die Struktur zudem eine vorgefertigte Innenbeschichtung aufweist.

36. Struktur nach Anspruch 35, wobei die Innenbeschichtung ausgewählt ist aus Farbe, Kunststoff, Tapete, Putz, Spachtel, Schallschutzplatten oder Holz.

## Revendications

1. Une structure d'isolation thermique en couches présentant une admittance variable pour l'énergie solaire, la structure comprenant :
une couche de recouvrement extérieure (511) en matière transparente résistant aux intempéries ;
au moins une couche d'isolation thermique admettant de l'énergie solaire pour laquelle la valeur de TxR n'est pas inférieure à 0,35 en unités de % de transmission de lumière x °C x m²/W (2 en unité de pourcentage de transmission de lumière x °F x hr. x pied carré BTU) où T est le pourcentage de transmission de lumière et R est la résistance thermique en degré °C x m²/W (°F x hr. x pied carré BTU) ;
au moins une couche (502, 509) de matière d'obturation optique ayant une transmission d'énergie solaire qui est variable ; et
une couche de recouvrement interne (515) qui est sensiblement parallèle à la couche de recouvrement externe (511) et qui soit transmet principalement, soit absorbe principalement, l'énergie solaire ; et
une couche de matière de stockage de chaleur (87, 142) adjacente à la couche de recouvrement interne ;
les couches étant formées pour donner un panneau de construction (90) avec les couches d'isolation et d'obturation disposées entre les couches de recouvrement interne et externe (511, 515) et avec des joints et des organes d'écartement (64, 505, 85) disposés entre aux moins certaines des couches qui sont adjacentes l'une à l'autre.

2. Une structure telle que revendiquée à la revendication 1, dans laquelle ladite matière de stockage de chaleur (87, 142) est choisie à partir d'une eau qui ne circule pas à l'extérieur de ladite structure, d'une matière de changement de phase, d'un béton et d'une maçonnerie.

3. Une structure telle que revendiquée à la revendication 1, dans lequel la matière de stockage de chaleur est contenue à l'intérieur d'un profilé en U (86).

4. Une structure telle que revendiquée à la revendication 1, dans laquelle la matière de stockage de chaleur est contenue à l'intérieur d'une structure cellulaire hermétique (3).

5. Une structure telle que revendiquée à la revendication 1, dans laquelle la matière de stockage de chaleur est contenue à l'intérieur d'une structure hermétique de deux feuilles parallèles (89) reliées et écartées l'une de l'autre à l'aide de tiges ou d'éléments en feuille (88).

6. Une structure telle que revendiquée à la revendication 1, dans laquelle la couche d'isolation thermique comprend une ou plusieurs couches ayant un revêtement de faible émissivité (502-509).

7. Une structure telle que revendiquée à la revendication 6, les couches de la structure étant écartées l'une de l'autre par des couches de gaz ou de vide.

8. Une structure telle que revendiquée dans une quelconque des revendications précédentes, dans laquelle la couche d'isolation thermique comprend au moins une couche de gaz.

9. Une structure telle que revendiquée à la revendication 8, dans laquelle la couche d'isolation thermique comprend une chicane de convection (20, 32, 512-514, 63, 83) qui est sensiblement transparente à la lumière et au rayonnement thermique, et qui est située entre les couches de recouvrement interne et externe.

10. Une structure telle que revendiquée à la revendication 8, dans laquelle la chicane de convection présente la forme d'une structure en nids d'abeilles (32) et est sensiblement transparente au rayonnement solaire, et qui est disposée de telle manière que les cellules de la structure en nids d'abeilles s'étendent de manière sensiblement perpendiculaire aux couches de recouvrement.

11. Une structure telle que revendiquée à la revendication 9 ou 10, dans laquelle la chicane de convection est en une matière comprenant plus de 90% de polyoléfine.

12. Une structure telle que revendiquée à la revendication 11, dans laquelle la polyoléfine est une matière de polyéthylène présentant un caractère cristallin qui est très élevé ou très bas.

13. Une structure telle que revendiquée à la revendication 11, dans laquelle la polyoléfine contient de 0,1 à 1% en poids de stabilisateur à amine encombrée.

14. Une structure telle que revendiquée à la revendication 11, dans laquelle la polyoléfine est réticulée.

15. Une structure telle que revendiquée dans une quelconque des revendications 9 à 14, dans laquelle un revêtement transparent de faible émissivité (503-508) est prévu sur la chicane de convection.

16. Une structure telle que revendiquée à la revendication 1, dans laquelle la couche d'isolation thermique comprend une pluralité de couches (511-515) qui sont transparentes à l'énergie solaire et sensiblement opaques au rayonnement thermique, chaque couche étant séparée d'une couche adjacente par une couche de gaz.

17. Une structure telle que revendiqué à la revendication 1, dans laquelle la couche d'isolation thermique comprend une couche de matière aérogel.

18. Une structure telle que revendiquée dans une quelconque des revendications précédentes dans laquelle la couche de recouvrement interne absorbe principalement l'énergie solaire (17, 509, 140B).

19. Une structure telle que revendiquée à la revendication 18, dans laquelle la couche de recouvrement interne présente un revêtement absorbant de faible émissivité (509).

20. Une structure telle que revendiquée dans une quelconque des revendications précédentes, dans laquelle la couche de recouvrement interne présente un revêtement transparent de faible émissivité (509).

21. Une structure telle que revendiquée dans une quelconque des revendications précédentes, dans laquelle la couche de recouvrement externe présente un revêtement transparent de faible émissivité (509).

22. Une structure telle que revendiquée dans une quelconque des revendications précédentes, comprenant un vide entre les couches de recouvrement interne et externe (511, 515).

23. Une structure telle que revendiquée dans une quelconque des revendications précédentes, dans laquelle la couche de recouvrement interne comprend une cellule photo électrique.

24. Une structure telle que revendiquée dans une quelconque des revendications précédentes, dans laquelle la couche ou au moins une des couches de matière d'obturation optique est photochrome.

25. Une structure telle que revendiquée dans une quelconque des revendications 1 à 23, dans laquelle la couche ou au moins une des couches de matière d'obturation optique est thermophotochrome.

26. Une structure telle que revendiquée dans une quelconque des revendications 1 à 23, dans laquelle la couche ou au moins une des couches de matière d'obturation optique est électrochrome.

27. Une structure telle que revendiquée dans une quelconque des revendications 1 à 23, dans laquelle au moins une des couches de matière d'obturation optique est thermochrome.

28. Une structure telle que revendiquée à la revendication 27, dans laquelle une desdites couches de matière d'obturation optique thermochrome (502, 509) est placée sur les couches de revêtement tant externe et qu'interne (511, 515), la couche d'isolation thermique comprenant un ou plusieurs revêtements transparents de faible émissivité placés de manière adjacente à une ou plusieurs couches de vide ou de gaz.

29. Une structure telle que revendiquée à la revendication 28, dans laquelle la couche transparente d'isolation comprend au moins deux couches écartées formant au moins un compartiment contenant un vide, la couche de recouvrement interne transmettant principalement l'énergie solaire.

30. Une structure telle que revendiquée à la revendication 28, dans laquelle la couche transparente d'isolation comprend au moins deux couches écartées formant au moins un compartiment contenant un vide, la couche de recouvrement interne absorbant principalement l'énergie solaire.

31. Une structure telle que revendiquée à la revendication 28, dans laquelle la couche transparente d'isolation comprend au moins deux couches écartées formant au moins un compartiment contenant un gaz, la couche de recouvrement interne transmettant principalement l'énergie solaire.

32. Une structure telle que revendiquée à la revendication 28, dans laquelle la couche transparente d'isolation comprend au moins deux couches écartées formant au moins un compartiment contenant un gaz, la couche de recouvrement interne absorbant principalement l'énergie solaire.

33. Une structure telle que revendiquée dans une quelconque des revendications précédentes, dans laquelle au moins une des couches de recouvrement interne et externe et la chicane de convection présente au moins un revêtement anti-réfléchissant (501 - 510).

34. Une structure telle que revendiquée à la revendication 16, ou dans l'une quelconque des revendications 17 à 33 dans leur dépendance de la revendication 16, dans laquelle le revêtement ou chaque revêtement anti-réfléchissant (501 - 510) présente un gradient d'indice de réfraction et est réalisé à partir de soit un polymère fluoré soit un oxyde d'aluminium ou de silicium poreux ou colonnaire.

35. Une structure telle que revendiquée à la revendication 19, dans laquelle ladite structure comprend supplémentairement une finition intérieure préfabriquée.

36. Une structure telle que revendiquée à la revendication 35, dans laquelle ladite finition intérieure est choisie à partir d'une peinture, d'une matière plastique, d'un papier mural, d'un plâtre, d'une feuille de roche, de carreaux acoustiques ou de bois.
